# EUROPEAN PATENT APPLICATION

(11) **EP 0 574 984 A1**
(43) Date of publication of application: **22.12.1993**
(21) Application number: 93201638.9
(22) Date of filing: 08.06.1993
(51) Int. Cl.: C02F 9/00, B01D 36/00, C02F 1/24

(54) **Method and plant for the purification of fluid containing sludge from painting processes**

(30) Priority: 18.06.1992 DK 813/92
(71) Applicant: NORDFAB A/S, DK-9550 Mariager (DK)
(72) Inventor: Petersen, Jes Hollerup, DK-9560 Hadsund (DK)
(74) Representative: OLSEN, Peter Vestergaard

(57) **Abstract**

A plant for the purification of rinsing water containing sludge from painting processes with different types of lacquer, where the water is treated with chemicals for the separation of the sludge, is provided with a sloping bottom (30) and with vertical, liquid stabilizing slats (34) in the sludge processing vessel (8).

In the lowermost part of the bottom there is an outlet (32) where concentrated sludge can be led out to a wet filter plant (2), where the sludge is distributed via branch pipes (40) to a number of filter bags (38). Depending on a control system, valves in the branch pipes (40) can for short periods, e.g. 3 seconds, open for the supply of sludge to each bag (38), and thereafter be closed for a longer period to allow for the seeping through of liquid to a collection tray (42). The water in the tray (42) can be led away for reuse.

With the invention, there can easily occur a separation of lacquer particles which, as with known methods, do not rise to the surface in the vessel (8) and are thereafter removed. It is thus possible to process rinsing water which contains different types of lacquer.

## Description

### STATE OF THE ART

The invention relates to a method for the purification of liquid which contains sludge from painting processes and comprising a step where chemicals are added to the liquid which is then conducted to a first vessel in which means are provided for the collection of flocculated sludge from the surface of the liquid, which is thereafter led from the first vessel to a second vessel via one or more channels which are disposed below and at relatively short distance from the liquid surface level.

Furthermore, the invention relates to a plant for use in exercising the method and for the purification of liquid containing sludge from painting processes, comprising a first vessel which has means for the collection of flocculated sludge on the surface of the liquid in the vessel, and a second vessel with an outlet for cleaned liquid, said vessels being mutually connected by one or more passages disposed below and at a relatively short distance from the surface level of the liquid during normal operation.

The known methods and plants are typically used for the purification of rinsing water from the painting processes, where the rinsing water collects unused, atomized paint in drops or particle form. The rinsing water is used in wet spray plants or as a liquid wall or a liquid floor respectively in a spray booth or under a traverse spraying apparatus. When purifying with the known plants, chemicals are added to the rinsing water, thereby making the particles of lacquer flocculate and float on top of the water, after which the sludge can be scraped off with mechanical means.

With painting processes, it is desirable to change between different types of paint and lacquer for the different products to be painted. What is thus involved is water-based, acid-hardening and bio-oil lacquers, different stains amd also very heavy types of lacquer, for example with zinc content. When rinsing water containing water-based lacquers and alternately acid-hardening lacquers is treated in the known purifying plants, it is difficult to get the water-based lacquer or paint to flocculate and float on the top. Instead, the water-based lacquer is sedimented and with time the purification plant gets filled up. Generally, the use of different types of lacquers in the painting processes gives rise to the problem of getting the sludge to collect on the surface. When the lacquer type is changed, the purification plant must undergo a time-consuming change-over process.

### EXPLANATION OF THE INVENTION

The inventive feature of the method according to the invention is that liquid from a bottom area in the first vessel is led out via a second outlet to a filtering plant where the sludge is retained. Thus particles and sludge from lacquer types with relatively high specific gravity can easily be removed from the rinsing water.

In the filtration plant, it is preferred to exercise the method by alternately adding the liquid to different filter bags which are thus held completely or partially filled with liquid, and where the liquid gradually seeps through. The liquid and the particles herein can hereby assume a calm state between the fillings, whereby the particles can settle in the bottom area of the bags and not in the bags' vertical sides. Moreover, the largest possible filter area is held free of blockage, which results in great filter efficiency.

The characteristic feature of the plant according to the invention is that near the bottom of the first vessel there is provided an outlet intended for liquid, this being connected to a liquid filtration plant arranged to retain the sludge. With the invention, it is not necessary to use long periods of time in changing over the plant when changing to a different type of lacquer, in that the lacquer particles with relatively high specific gravity are collected at the bottom and can be led out to a wet filter plant.

With the method and the plant according to the invention, in addition to greater flexibility, it is also possible to achieve a better purification of the rinsing water which can be reused.

The plant according to the invention can be configured as disclosed in claim 4, where the liquid filtering plant comprises a number of bag filters with upwardly-facing inlet openings which, with a corresponding number of pipes, are connected to the outlet from the first vessel, and where under the bag filters there is a collection tray for the filtered liquid. By using a plurality of filters bags, a large filter area is achieved with small space requirements for the plant, in addition to the advantages mentioned during use of the method.

It is preferred that each pipe is provided with a shut-off valve which is controlled by a control system which can alternately open the valves for given periods of time depending on a signal indicating the liquid levels in the filter bags. Hereby the effectiveness of the filter may be optimised so that the flow-through time for the liquid in the filter becomes as short as possible.

In order to ensure that heavy lacquer particles are led to the filter plant, it is preferred to design the bottom of the first vessel as disclosed in claim 6.

With the embodiment disclosed in claim 7, where the liquid stabilizing means consist of a series of plate pieces whose lower edges are disposed at a relatively small distance above the bottom, the particles of lacquer can float down towards the bottom and thereafter follow the bottom in the direction towards the outlet.

### THE DRAWING

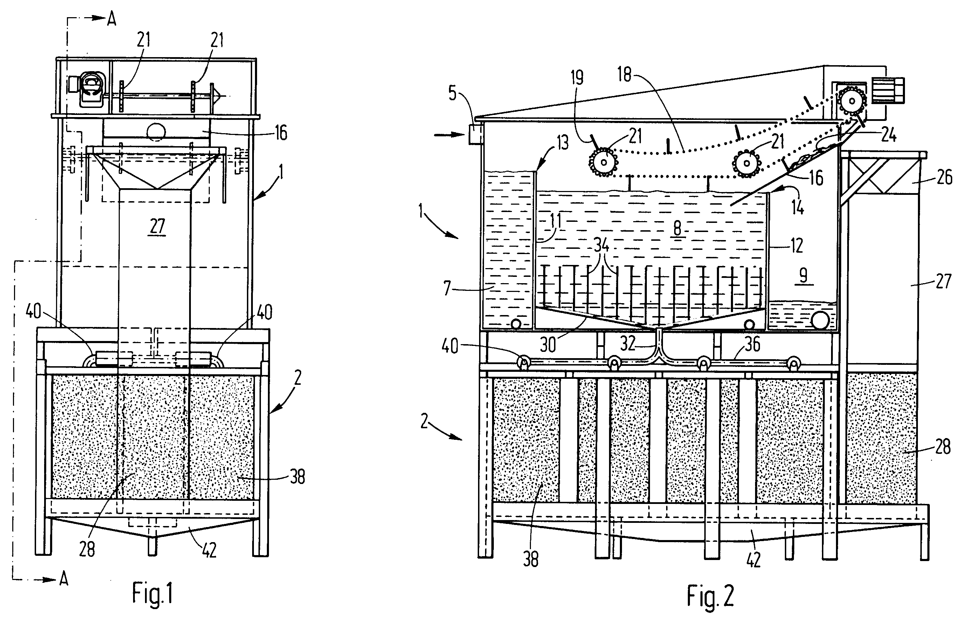

An embodiment of the method and the plant according to the invention will now be described in more detail with reference to the drawing, where
fig. 1 shows a plant according to the invention seen in an end view,
fig. 2 shows a section along the line A-A in fig. 1, and

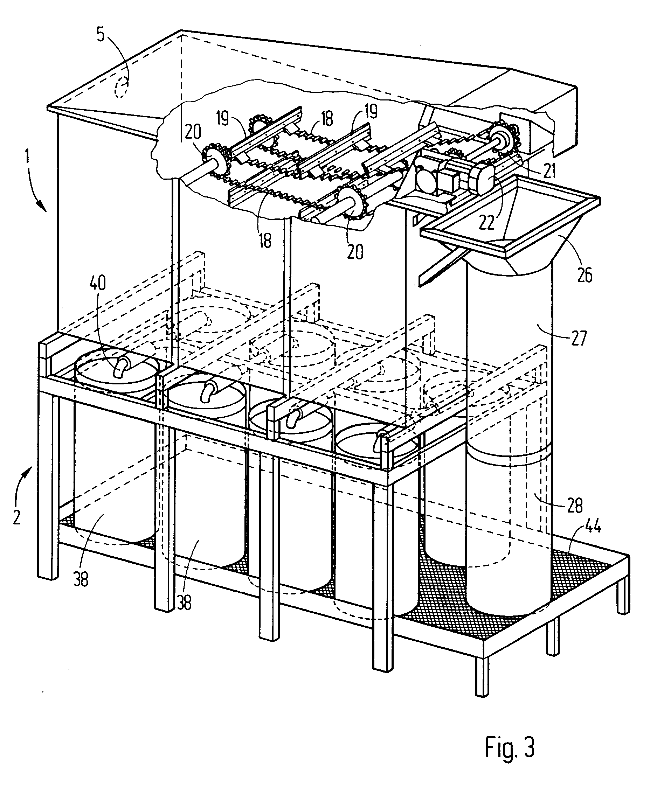

fig. 3 shows a partially cut-through perspective view of the plant.

### DESCRIPTION OF THE EMBODIMENTS

In principle, the purification plant is designed with an upper part 1 containing liquid vessels and lower part 2 containing a filter plant. The upper part 1 is provided in a known manner with an inlet 5 for the liquid which is to be purified, and has a pre-chamber 7, a sludge vessel 8 and an outlet vessel 9. The vessels 7, 8 and 9 are mutually separated by separating walls 11 and 12. The upper edges 13 and 14 determine the level of the liquid in the vessel 7 and the vessel 8.

At the vessel 8, also arranged in a known manner, there is a ramp 16 in connection with which there is provided a scraper arrangement consisting of endless chains 18 on which there are transverse scraper plates 19. The chains 18 are suspended on sprocket wheels 20 and 21, where the latter sprocket 21 is driven by an electric motor 22.

By the known method, the flocculated sludge 24 is scraped from the surface of the liquid in the vessel 8 by the blades 19 and is drawn up by the ramp 16. At the end of the ramp 16 there is provided a funnel 26 which, via a shaft 27, leads the sludge to the filter bags 28.

The new feature of the plant according to the invention is that the vessel 8 has a sloping bottom 30, the lowest point of which is provided with an outlet 32. Above the bottom there are a number of plane, vertical slats 34 which prevent currents and turbulence in the liquid. The slats 34 are spaced from the bottom 30 a relatively short distance from the bottom 30. This is in order to allow movement of the liquid and solid particles in the direction towards the outlet 32.

From the outlet 32 there are branch pipes 36 from which the liquid can be led out to the filter bags 38. There are eight filter bags 38, each of which is provided with a branch pipe 40. In each of the pipes 40 there is inserted a not-shown solenoid valve which in a known manner is controlled by a central control system. Under the filter bags 38 there is a collection tray 42 covered by a grid 44.

By the method according to the invention, rinsing water is led from a painting process to the inlet 5 so that the pre-chamber 7 is filled to the edge 13, where the liquid flows over into the sludge vessel 8. To the chamber 7 or the vessel 8, chemicals are added which cause the paint particles to flocculate so that the lightest particles collect on the surface in a known manner and are scraped away. The heavier particles existing below the surface will be inclined to sink towards the bottom, especially since the liquid is held in a calm state by the slats 34. A high concentration of sludge and paint particles will gradually collect close to the outlet 32. This sludge is distributed by the pipes 36 and 40 to the filter bags 38. It is preferred that the valves in the branch pipes 40 are controlled periodically, i.e. opened for given uniform periods of time, for example 3 seconds each time, so that each bag 38 receives a portion of the sludge-mixed liquid and thereafter is allowed to wait for 21 seconds before receiving the next portion of liquid. The liquid in the bags 38 hereby has the possibility of becoming calm, and the heavy particles can sink down towards the bottoms of the bags and thus not prevent the outflow of the liquid through the vertical sides of the bags 38.

Other methods of control can naturally be envisaged, for example there can be sensors at each of the filter bags 38, so that the valve is opened and closed respectively by the passage of the liquid surface of the minimum and maximum level in the bag 28.

## Claims

1. Method for the purification of liquid containing sludge from painting processes comprising the step of conducting the liquid to a first vessel (8) containing means (16,19) for the collection of flocculated sludge (24) from the surface of the liquid, and thereafter conducting the liquid from the first vessel (8) to a second vessel (9) via one or more passages which are disposed below and at relatively short distance from the surface level of the liquid, **characterized** in that liquid from a bottom area in the first vessel is led out via a second outlet (32) to a filtering plant (2) where the sludge is retained.

2. Method according to claim 1, **characterized** in that the liquid in the filtering plant is alternately delivered to different filter bags (38) which are hereby held completely or partly filled with liquid, and where the liquid gradually seeps through.

3. Plant for the utilization of the method according to any of the foregoing claims, and for the purification of liquid which contains sludge from painting processes, comprising a first vessel (8) which has means (16,19) for the collection of flocculated sludge (24) from the surface of the liquid in the vessel (8), and a second vessel (9) with an outlet for cleaned liquid, said vessels (8,9) being mutually connected by one or more passages disposed below and at relatively short distance from the normal surface level of the liquid during operation, **characterized** in that close to the bottom of the first vessel (8) there is an outlet (32) intended for liquid, which outlet (32) is connected to a liquid filtering plant (2) arranged for the retention of the sludge.

4. Plant according to claim 3, **characterized** in that the liquid filtering plant (2) comprises a number of filter bags (38) with upwardly-facing inlet openings, which with a corresponding number of pipes (36,40) are connected to the outlet from the first vessel (8), and where a collection tray (42) is provided under the filter bags (38) for the filtered liquid.

5. Plant according to claim 4, **characterized** in that each pipe (40) is provided with a shut-off valve which is controlled by a control system which may alternately open the valves for a given period or depending on a signal indicating the liquid levels in the filter bags (38).

6. Plant according to any of the claims 3 - 5, **characterized** in that the first vessel (8) has a bottom (30) which slopes downwards towards the outlet (32) in said vessel (8), and that in and at a distance up from the bottom (30) there are provided a number of substantially vertical liquid stabilizing means (34).

7. Plant according to claim 6, **characterized** in that the liquid stabilizing means consist of a number of plate pieces (34), the lower edges of which pieces (34) are disposed at a relatively small distance above the bottom (30).
